# EUROPEAN PATENT SPECIFICATION

(11) **EP 1 985 537 B1**
(45) Date of publication and mention of the grant of the patent: **03.07.2013**
(21) Application number: 08251108.0
(22) Date of filing: 27.03.2008
(51) Int. Cl.: B64D 29/00

(54) **Nacelle door arrangement**
Haubenanordnung in einer Triebwerksgondel
Ensemble de capots dans une nacelle

(30) Priority: 23.04.2007 US 738607
(43) Date of publication of application: 29.10.2008
(73) Proprietor: United Technologies Corporation, Hartford, CT 06101 (US)
(72) Inventor: Gukeisen, Robert L., Middletown, CT 06457 (US); Marshall, Richard M., West Granby, CT 06090 (US)
(74) Representative: Leckey, David Herbert

(56) References cited:
- EP-A1- 0 453 360
- FR-A1- 2 900 907
- US-A- 5 350 136

## Description

### BACKGROUND OF THE INVENTION

The present invention relates to aircraft engine nacelles, and more particularly to aircraft engine nacelles having thrust reverser cowl doors and core cowl doors which are independently hinged to eliminate a lower bi-fi splitter.

Gas turbine engines are mounted on an aircraft by a support structure such as a pylon. A nacelle arrangement encloses the engine forming a shelter which is aerodynamically contoured to reduce drag. The nacelle arrangement is supported in part from the pylon and in part from the engine.

Conventional nacelle arrangements as disclosed in US 5 350 136 or EP 0 453 360 include a removable metal and or composite cowling. The cowling includes a fan duct reverser cowl and a core cowl. The larger diameter fan duct reverser cowl and the smaller diameter core cowl are interconnected by a bi-fi wall. Although the bi-fi provides additional stiffness for the nacelle, the bi-fi splitter may partially block the bypass fan stream and reduce engine efficiency.

### SUMMARY OF THE INVENTION

The present invention provides a nacelle arrangement as recited in claim 1.

A disclosed embodiment of a nacelle assembly according to the present invention includes separately movable fan cowl doors, thrust reverser doors, and core cowl doors. The thrust reverser doors and core cowl doors have separate thrust reverser door hinge lines and core cowl door hinge lines for independent operation to eliminate the requirement of a lower bi-fi splitter. The removal of the lower Bi-Fi splitter provides improved aerodynamic packaging with improved performance by reducing drag in the bypass fan stream.

### BRIEF DESCRIPTION OF THE DRAWINGS

The various features and advantages of this invention will become apparent to those skilled in the art from the following detailed description of the currently disclosed embodiment. The drawings that accompany the detailed description can be briefly described as follows:
Figure 1A is a general isometric view of a nacelle with a fan cowl door in the open position;
Figure 1B is a general isometric view of a nacelle with a fan cowl door and a thrust reverser door in the open position;
Figure 1C is a general isometric view of a nacelle with a fan cowl door, a thrust reverser door, and a core cowl door in the open position; and
Figure 2 is a side view of a nacelle illustrating the hinge line of each door.

### DETAILED DESCRIPTION OF THE DISCLOSED EMBODIMENT

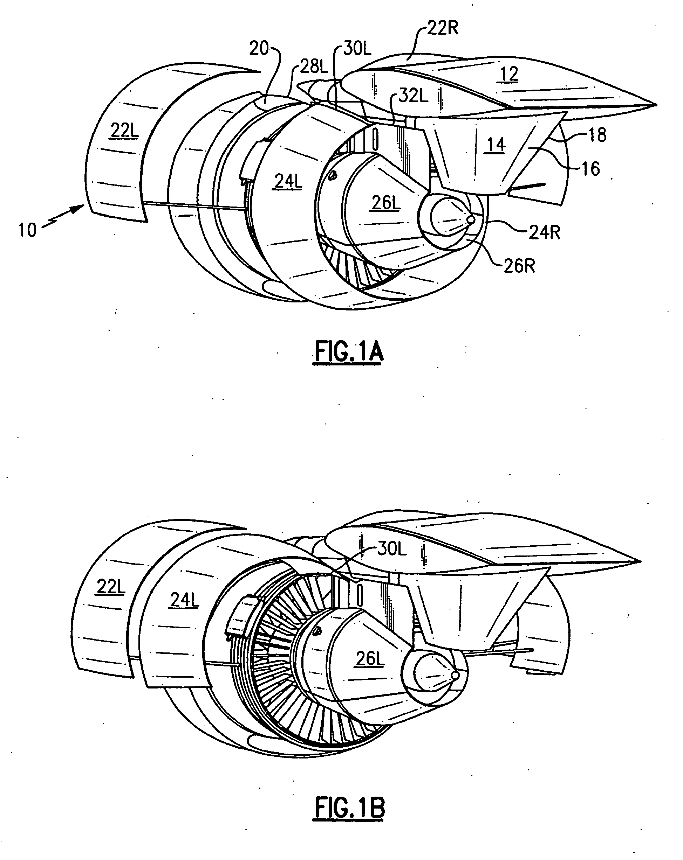

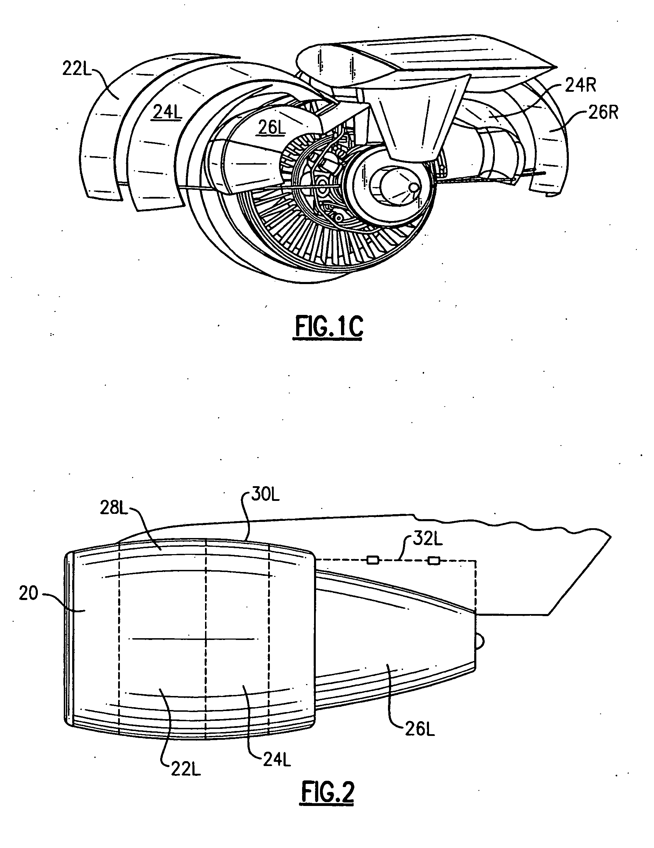

Figures 1A-1C schematically illustrates a gas turbine engine 10 of the axially flow, turbo fan type. Wing 12 of an aircraft includes a pylon or other support structure 14 which engages the engine 10. The pylon 14 has a first side 16 and a second side 18. A nacelle assembly 20 is mounted to the pylon 14 to circumscribe the engine 10 to support and position the engine 10 relative the aircraft wing 12.

The nacelle assembly 20 includes separately movable fan cowl doors 22L, 22R, thrust reverser doors 24L, 24R, and core cowl doors 26L, 26R. The core cowl doors 26L, 26R are located at least partially radially within the thrust reverser doors 24L, 24R. Each of the fan cowl doors 22L, 22R, thrust reverser doors 24L, 24R, and core cowl doors 26L, 26R are defined to hinge about a respective hinge line 28L, 28R, 30L, 30R, and 32L, 32R. It should be understood that the fan cowl door 22, the thrust reverser door 24, and the core cowl door 26 include both left hand (LH) and right hand (RH) clam shell-type doors which each include a respective hinge. It should be understood that various locking mechanism may be utilized with each of the separately movable fan cowl doors 22L, 22R, thrust reverser doors 24L, 24R, and core cowl doors 26L, 26R which need not be described in detail herein.

The clam shell-type fan cowl doors 22L, 22R, thrust reverser doors 24L, 24R, and core cowl doors 26L, 26R open around their respective hinge lines 28L, 28R, 30L, 30R, and 32L, 32R. The core cowl doors hinge lines 32L, 32R are separate from the thrust reverser door hinge lines 30L, 30R (Figure 2) such that the thrust reverser doors 24L, 24R and the core cowl doors 26L, 26R may be opened separately. Due to the radially internal location, the thrust reverser doors 24L, 24R must be opened prior to opening of the core cowl doors 26L, 26R.

As the thrust reverser doors 24L, 24R and the core cowl doors 26L, 26R, separate the thrust reverser door hinge lines 30L, 30R from the core cowl doors hinge lines 32L, 32R the independent operation eliminates the requirement for a lower bi-fi splitter. The removal of the lower bi-fi splitter provides improved aerodynamic packaging with improved performance by reducing drag in the bypass fan stream. Service lines and the like which were routed through the lower bi-fi splitter are now routed through the upper bi-fi splitter. Although conventional blocker door thrust reverser systems may not be utilized with this door opening system, other thrust reverser systems such as pivot door systems may be utilized herewith.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A nacelle arrangement (20) for mounting to an engine pylon (14) and comprising:
a thrust reverser door (24L;24R) which pivots about a thrust reverser door hinge axis (30L:30R); and
a core cowl door (26L;26R) which pivots about a core cowl hinge axis (32L;32R); **characterised in that** said core cowl hinge axis (32L;32R) is separate from said thrust reverser door hinge axis (30L;30R).

2. A nacelle arrangement (20) as recited in claim 1 and further comprising:
a fan cowl door (22L;22R) which pivots about a fan cowl door hinge axis (28L;28R) and which is axially upstream of said thrust reverser door (24L;24R).

3. The nacelle arrangement as recited in claim 2, wherein the fan cowl door (22L;22R), the thrust reverser door (24L;24R), and the core cowl door (26L;26R) include both left hand and right hand doors which each pivot about a respective hinge axis.

4. The nacelle arrangement as recited in any preceding claim, wherein said core cowl door (26L;26R) is at least partially radially within said thrust reverser door (24L;24R).

5. The nacelle arrangement as recited in any preceding claim, wherein said core cowl hinge axis (32L;32R) is located along a side of the engine pylon (14) which supports said nacelle arrangement (20) when mounted.

6. The nacelle arrangement as recited in any preceding claim, wherein said core cowl door (26L;26R) defines an upper bi-fi splitter.

## Patentansprüche

1. Gondelanordnung (20) zur Anbringung an einem Triebwerks-Pylon (14), wobei die Gondelanordnung Folgendes aufweist:
eine Schubumkehrklappe (24L; 24R), die eine Schwenkbewegung um eine Schubumkehrklappen-Gelenkachse (30L; 30R) ausführt; und
eine Kernverkleidungsklappe (26L; 26R), die eine Schwenkbewegung um eine Kernverkleidungs-Gelenkachse (32L; 32R) ausführt;
**dadurch gekennzeichnet, dass** die Kernverkleidungs-Gelenkachse (32L; 32R) getrennt von der Schubumkehrklappen-Gelenkachse (30L; 30R) ausgebildet ist.

2. Gondelanordnung (20) nach Anspruch 1,
weiterhin aufweisend eine Bläserverkleidungsklappe (22L; 22R), die eine Schwenkbewegung um eine Bläserverkleidungsklappen-Gelenkachse (28L; 28R) ausführt und die der Schubumkehrklappe (24L; 24R) axial vorgeordnet ist.

3. Gondelanordnung nach Anspruch 2,
wobei die Bläserverkleidungsklappe (22L; 22R), die Schubumkehrklappe (24L; 24R) und die Kernverkleidungsklappe (26L; 26R) sowohl eine linke als auch eine rechte Klappe beinhalten, die jeweils eine Schwenkbewegung um eine jeweilige Gelenkachse ausführen.

4. Gondelanordnung nach einem der vorausgehenden Ansprüche,
wobei die Kernverkleidungsklappe (26L; 26R) zumindest teilweise radial innerhalb der Schubumkehrklappe (24L; 24R) vorgesehen ist.

5. Gondelanordnung nach einem der vorausgehenden Ansprüche,
wobei die Kernverkleidungs-Gelenkachse (32L; 32R) entlang einer Seite des Triebwerk-Pylons (14) vorgesehen ist, der die Gondelanordnung (20) im montierten Zustand trägt.

6. Gondelanordnung nach einem der vorausgehenden Ansprüche,
wobei die Kernverkleidungsklappe (26L; 26R) einen oberen Bi-Fi-Splitter bildet.

## Revendications

1. Aménagement de nacelle (20) pour monter sur un mât de moteur (14) et comprenant :
une trappe d'inverseur de poussée (24G ; 24D) qui pivote autour d'un axe charnière (30G ; 30D) de la trappe d'inverseur de poussée ; et
une trappe de capot central (26G ; 26D) qui pivote autour d'un axe charnière de capot central (32G ; 32D) ; **caractérisé en ce que** ledit axe charnière (32G ; 32D) du capot central est séparé dudit axe charnière (30G ; 30D) de la trappe d'inverseur de poussée.

2. Aménagement de nacelle (20) selon la revendication 1, comprenant par ailleurs : une trappe de capot de ventilateur (22G ; 22D) qui pivote autour d'un axe charnière (28G ; 28D) de la trappe du capot de ventilateur et qui est axialement en amont de ladite trappe d'inverseur de poussée (24G ; 24D).

3. Aménagement de nacelle selon la revendication 2, dans lequel la trappe de capot de ventilateur (22G ; 22D), la trappe d'inverseur de poussée (24G ; 24D) et la trappe de capot central (26G ; 26D) comprennent des trappes à la fois à gauche et à droite qui pivotant chacune autour d'un axe charnière respectif.

4. Aménagement de nacelle selon l'une quelconque des revendications précédentes, dans lequel ladite trappe de capot central (26G ; 26D) est au moins en partie radialement à l'intérieur de ladite trappe d'inverseur de poussée (24G ; 24D).

5. Aménagement de nacelle selon l'une quelconque des revendications précédentes, dans lequel ledit axe charnière (32G ; 32D) du capot central est situé le long d'un côté du mât de moteur (14) qui supporte ledit aménagement de nacelle (20) lorsqu'il est monté.

6. Aménagement de nacelle selon l'une quelconque des revendications précédentes, dans lequel ladite trappe de capot central (26G ; 26D) définit un séparateur bi-fi supérieur.
